# EUROPEAN PATENT APPLICATION

(11) **EP 4 242 778 A1**
(43) Date of publication of application: **13.09.2023**
(21) Application number: 22020103.2
(22) Date of filing: 11.03.2022
(51) Int. Cl.: G05D 11/13, B01F 23/00

(54) **MIXING IMPROVEMENT THROUGH GAS VENT**

(71) Applicant: Linde GmbH, 82049 Pullach (DE)
(72) Inventor: Hussary, Nakhleh A., 82049 Pullach (DE); Bern, Robert, 82049 Pullach (DE)
(74) Representative: Lu, Jing

(57) **Abstract**

The present application relates to a system (1) for mixing gases (G1, G2, ...) to provide a gas mixture (G) comprised of said gases (G1, G2, ...), wherein the system (1) comprises: a mixer (2) comprising an outlet (3), the mixer (2) being configured to mix the gases (G1, G2, ...) to provide the gas mixture (G) at the outlet (3) of the mixer (2), a gas line (4) for passing the gas mixture (G) to a process (5) or a storage tank (6), a vent (8) for venting a portion of the gas mixture (G), a valve (7) connected to the outlet (3), wherein the valve (7) comprises an actuator (70) configured to bring the valve (7) into a first state in which the outlet (3) of the mixer (2) is connected to the gas line (4) via the valve (7) so as to pass the gas mixture (G) from the outlet (3) of the mixer (2) via the valve (7) into the gas line (4) to said process (5) or said storage tank (6), and wherein the actuator (70) is configured to bring the valve (7) into a second state in which the outlet (3) is disconnected from the gas line (4) and connected to the vent (8) via the valve (7) to discharge a portion of the gas mixture (G) via the valve (7) through the vent (8), and a control unit (20) configured to control the actuator (70) to maintain the valve (7) in the second state over a venting time period during a starting phase of said mixing of said gases (G1, G2, ...) for discharging the gas mixture (G) through the vent (8) until a stable gas mixture (G) is reached by the mixer (2).

## Description

The present invention relates to a system for mixing gases to provide a gas mixture comprising said gases and to a corresponding method for mixing gases to provide a gas mixture comprising said gases. Particularly, the gas mixture is provided to a process or a storage tank.

When gases are mixed it is always the case that in the first moments of mixing the mixture has not reached a stable value. The time period at the start of mixing during which the mixture has not reached a stable value may vary from 10s of seconds to a number of minutes depending on the mix concentrations and the total flow used. This is ultimately not acceptable in many situations where the time for achieving a stable gas mix is critical to the process, particularly when the flow is directly used from the mixer or when the mixer is filling a buffer tank (as the mixer is turned on and off as it cycles to mix and feed the buffer tank).

In order to only use a properly mixed stable mixture, the mixture will often be vented and disposed of and only after a stable period is reached, the gas is then routed to the process or a reservoirs buffer tank. However, the vented gas at every start up is wasted as it is vented in the atmosphere. This wasted gas represent a sunk cost in the operating of the system. This wasted gas is high when the gas dopant is in the low percent range or the ppm range since the stabilization time is longer.

Therefore, the problem to be solved by the present invention is to provide a system and a method for generating a gas mixture which reduce at least one of the aforementioned difficulties.

This problem is solved by a system for providing a gas mixture having the features of claim 1 and by a method for providing a gas mixture according to claim 12.

Preferred embodiments of these aspects of the present invention are stated in the corresponding sub claims and are described below.

According to claim 1, a system for mixing gases to provide a gas mixture comprised of said gases is disclosed, wherein the system comprises:
- a mixer comprising an outlet, the mixer being configured to mix the gases to provide the gas mixture at the outlet of the mixer,
- a gas line for passing the gas mixture to a process or a storage tank,
- a vent for venting a portion of the gas mixture (e.g., downstream of said outlet of the mixer),
- a valve connected to the outlet, wherein the valve comprises an actuator configured to bring the valve into a first state in which the outlet of the mixer is connected to the gas line via the valve so as to pass the gas mixture from the outlet of the mixer via the valve into the gas line to said process or said storage tank, and wherein the actuator is configured to bring the valve into a second state in which the outlet is disconnected from the gas line and connected to the vent via the valve to discharge a portion of the gas mixture via the valve through the vent, and
- a control unit configured to control the actuator to maintain the valve in the second state over a venting time period during a starting phase of said mixing of said gases for discharging the gas mixture through the vent until a stable gas mixture is reached by the mixer.

Particularly, a stable gas mixture in the framework of the present invention is a gas mixture in which the concentration of the respective gas comprised by the gas mixture varies less than 10 Vol-%, particularly less than 5 Vol.-%, particularly less than 1 Vol.-%

According to a preferred embodiment of the system according to the present invention, the valve is a three-way-valve, particularly a three-way solenoid valve, i.e., the actuator comprises a solenoid to generate a magnetic field for operating the valve (e.g., changing its state from the first to the second state and vice versa)

Furthermore, according to an embodiment of the system, the valve is a proportional valve such that the amount of the gas mixture being vented can be controlled dynamically both during opening and closing of the vent so that the quality of the gas mixture is not affected by a sudden closing or opening of the valve causing disturbances in the mixer.

According to an embodiment of the system the venting time period is programmable by a user. Furthermore, according to an embodiment of the system, the venting period is automatically determined by the system, particularly through at least one look-up tables. The look-up table can be based on experiments or numerical formulas that fit this data or functions that are derived based on the characteristic of the mass flow controllers and the system design physics. In a second step this may be further adjusted by a user if needed.

Particularly, in an embodiment, the venting time period is in the range from 10 seconds to 10 minutes, particularly in the range from 20 seconds to 2 minutes.

Furthermore, according to an embodiment, the system is configured to set the venting time period based on at least a desired concentration of the respective gas in the gas mixture and a total flow of the gas mixture provided by the mixer, wherein, in an embodiment, the control unit is configured to read the desired concentration of the respective gas and said total flow from a look-up table and/or is configured to calculate the venting time period using a formula implemented into the control unit (e.g. either in hardware or in software).

Furthermore, according to an embodiment, the gas mixture is a binary gas mixture, wherein the control unit is configured to determine the venting time period t based on the formula t = a / c + b*v, where c is the (e.g. volume) concentration of one of the gases in the binary mixture (i.e.100-c is the volume concentration of the other gas of the binary mixture), v is the mass flow rate of the gas mixture provided by the mixer, and a and b are factors obtained theoretically or experimentally. The formula may also be expanded to include 3, 4 or even more gases in the gas mixture. The above formula may also be re-formulated such it employs the mass flow rate of each gas component instead of the final gas mixture. Furthermore, according to an embodiment of the system, the system can be configured to determine the venting time period as a function of the concentration of each gas component in the mixture and the mass flow of each component of the mixture (or subsequently the flow of the final mixture). This also applies to a binary gas mixture formed from two gases or multi-component gas mixture.

At the start of mixing of the gas mixture in the mixer (as in any gas mixer), the gas mixture will take some time to stabilize due to the needed time to stabilize the flows from the different individual gas supply paths of the mixer and due to the time needed to purge the gas line and replace gas volumes therein with the proper gas.

However, venting the gas at the start of every cycle will result in needlessly wasting gas. Therefore, in order to save on the gas, the present invention provides an intelligent start up procedure in various embodiments to minimize this issue. Venting at the exit of the gas mixer, prior to routing the accurately mixed gas to the process or a reservoir tank, is done for specific cases and for a variable time period depending on a logic that will be described in the following.

According to an embodiment of the system according to the present invention, the system is configured to allow inputting of a gas mixture profile by a user, the gas mixture profile comprising the desired concentrations of the gases of a gas mixture, wherein the control unit is configured to cause the mixer to mix the gas mixture according to the gas mixture profile selected by the user, wherein the control unit is configured to detect selection of a new gas mixture profile by the user and whether it deviates from a last previously used gas mixture profile.

Particularly, in an embodiment, in case the control unit detects selection of a new gas mixture profile by the user that deviates from the gas mixture profile of the last previously mixed gas mixture, the control unit is configured to set the venting time period based on an intrinsic time constant of the mixer and as a function of the concentrations specified in the new gas mixture profile.

Furthermore, according to an embodiment, in case the control unit detects that a new gas mixture profile selected by the user corresponds to the gas mixture profile of the last previously mixed gas mixture and in case the mixer has at least been idle over a pre-defined time span, the control unit is configured to set the venting time period as a function of the time period during which the mixer has been idle, wherein particularly the venting time period t is calculated by the control unit according to t=a*tₒ+b, where tₒ is the time span the mixer was idle, and a and b are coefficients. Other polynomial or non-linear equations are also possible to employ.

Further, in an embodiment, in case the control unit detects that a gas mixture profile selected by the user corresponds to the gas mixture profile of the last previously mixed gas mixture and in case the mixer has been idle by less than said pre-defined time span, the control unit is configured to set the venting time period to zero so that the system does not vent at all or to a value that is shorter than the venting time period set in case the mixer was idle at least over said pre-defined time span, wherein in an embodiment said value is in the range from 10 seconds to 60 seconds, and wherein in an embodiment said time span is in the range from 3 hours to 12 hours.

Particularly, the venting time period may also be related in a mathematical relationship to the time period during which the mixer is idle reflecting an increasing venting time period with an increasing idle time period.

According to a further preferred embodiment of the system according to the present invention, the system comprises at least one sensor for measuring a concentration of a gas of the gas mixture or a plurality of sensors, each sensor configured to measure a concentration of a gas of the gas mixture, wherein the control unit is configured to determine if a stable gas mixture is achieved based on the measured concentration(s) and end the venting period if the gas mixture is determined to be stable.

Yet another aspect of the present invention relates to a method for providing a gas mixture comprised of gases using a system according to the present invention, wherein the method comprises the steps of:
- Mixing a plurality of gases to provide a gas mixture at an outlet of the mixer, wherein during a starting phase of said mixing the gas mixture is discharged via the valve through the vent over a venting time period to achieve a stable gas mixture, and
- Passing the gas mixture after said venting via the valve and through the gas line to said process or storage tank.

According to an embodiment of the method, the venting time period is automatically adjusted.

Furthermore, according to an embodiment of the method, the venting time period is in the range from 10 seconds to 10 minutes, particularly in the range from 20 seconds to 2 minutes.

Furthermore, in the embodiment, the venting time period is automatically set based at least on a desired concentration of the respective gas in the gas mixture and a total flow of the gas mixture provided by the mixer, wherein particularly the control unit reads the respective concentration and said total flow from a look-up table and/or calculates the venting time period using a formula implemented into the control unit (see also above).

Further, according to an embodiment of the method, the gas mixture is a binary gas mixture, wherein the control unit determines the venting time period t based on the formula t = a / c + b*v, where c is the (e.g. volume) concentration of the gas (and 100-c is the volume concentration of the other gas of the binary mixture in particular), v is the mass flow rate of the gas mixture provided by the mixer, and a and b are factors obtained theoretically or experimentally. The formula may also be expanded to include 3, 4 or more gases in the gas mixture. The above formula may also be re-formulated such it employs the mass flow rate of each gas component instead of the final gas mixture (see also above).

According to a further embodiment of the method, prior to mixing the gas mixture, the method comprises the step of: Detecting by the control unit if a new gas mixture profile has been selected by the user, the new gas mixture profile comprising desired concentrations of gases to be mixed by the mixer to provide the gas mixture, wherein
- in case the control unit detects selection of a new gas mixture profile by the user that deviates from the gas mixture profile of the last previously mixed gas mixture, the venting time period is automatically set based on an intrinsic time constant of the mixer and based on the new gas mixture profile;
- in case the control unit detects that a new gas mixture profile has been selected by the user that corresponds to the gas mixture profile of the last previously mixed gas mixture and in case the mixer has at least been idle over a pre-defined time span, the venting time period is automatically set based on a time period during which the mixer was idle, wherein in an embodiment, the venting time period t is set to t=a*tₒ+b, where tₒis the time period the mixer was idle, and wherein a and b are coefficients;
- in case the control unit detects that a new gas mixture profile has been selected by the user that corresponds to the gas mixture profile of the last previously mixed gas mixture and in case the mixer has been idle by less than said pre-defined time span, the venting time period is automatically set to zero (so that the system does not vent) or to a value that is shorter than the venting time period set in case the mixer was idle at least over said pre-defined time span, wherein in an embodiment said value is in the range from 10 seconds to 60 seconds, and wherein in an embodiment said time span is in the range from 3 hours to 12 hours.

According to yet another preferred embodiment of the method according to the present invention, at least one sensor of the system is used for measuring a concentration of a gas of the gas mixture, or a plurality of sensors is used for measuring a concentration of the respective gas of the gas mixture, wherein it is determined if a stable gas mixture is achieved based on the measured concentration(s) and the venting period is automatically ended if the gas mixture is determined to be stable.

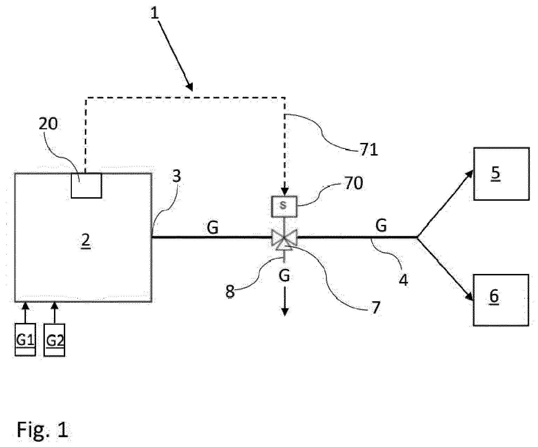

In the following, embodiments of the present invention as well as further features and advantages of the present invention, wherein
- Fig. 1: shows a schematic illustration of an embodiment of a system according to the present invention for providing a gas mixture mixed from a plurality of gases.

In order to eliminate the use of improperly mixed gas at the start of engaging the mixer 2 a simple system 1 is employed as shown in Fig. 1.

During the starting phase, preferably a 3-way solenoid valve 7 is opened such that the flow of the gas mixture G mixed from gases G1, G2, ... by the mixer 2 is vented out for a predetermined venting time period. This venting time period is preferably selected such that the mixing of the gas mixture G by the mixer 2 has reached a stable point after which the solenoid valve 7 is closed and the main flow is directed from the outlet 3 of the mixer via a gas line 4 towards a process 5 or to a storage tank 6 to be filled. Furthermore, alternatively, instead of setting a time period of venting, the system can comprise a sensor for detecting a gas concentration of one gas (or multiple sensors for multiple gases G1, G2,...), e.g. at the outlet, and check if the mixture is as desired, wherein in case the mixture corresponds to the desired mixture (i.e. a stable gas mixture G) the venting is stopped.

Particularly, the actuator (e.g., solenoid) 70 of the valve 7 is controlled through a control or communication signal 71 by a control unit 20 of the mixer 2 such that the timing of actuating the solenoid 70 (e.g., opening and closing the valve 7) is synchronized with the operation of the mixer 2.

The amount of gas vented may be set high (close to the upper end of the capability of the mixer 2) such that a stable gas mixture G is reached in a minimum period of time. The time will typically range from a few seconds to a few minutes (10 seconds to 10 minutes or more typically 20 seconds to 2 minutes). During this time the gas mix is improper. This is critical when a storage tank 6 is being filled. Typically, a storage tank 6 is filled to supply a non-continuous operation (such as one or multiple welding stations). As the tank drops in pressure, the mixer 2 is engaged and stays on filling the tank 6 until the maximum pressure in the tank 6 reaches its desired value. As the mixer 2 is turned on and off, it will supply an improper gas mixture G during the starting phase. This will, over time, cause the gas mixture G in the tank 6 to be off from the desired gas mixture profile. By using a mixer vent valve 7, the improperly mixed gas mixture G during the starting phase of the mixing procedure is vented outside and will, therefore, not affect the final gas mixture G in the tank 6.

The venting time period can be selected to be a function of the gas concentration (gas concentration in the low % level or in the ppm level will take more time to stabilize) and the total gas mixture flow provided by the mixer 2 (the higher the flow the mixer 2 is used at the quicker it will be for the gas mixture G to reach its stable point). These values may be obtained experimentally and be incorporated into a look-up table in the control unit 20 of the gas mixer 2 or a formula may be used to calculate this time.

For example, a formula such as t =a/c+b*v may be employed, where t is the venting time period, c is the (e.g. volume) concentration of the gas, v is the mass flow rate of the gas mixture G provided by the mixer 2, and a and b are factors obtained theoretically or experimentally (see also above). This formula illustrates a binary gas mix. This may also be expanded to include 3, 4 or more gases in the gas mixture G. Furthermore, the above formula may be re-formulated such it employs the mass flow rate of each gas component instead of the final gas mixture. Furthermore, generally, in a preferred embodiment, the system is configured to determine the venting time periods as a function of the concentration of each gas component in the mixture and the mass flow of each component of the mixture (or subsequently the flow of the final mixture), see also above.

The vent solenoid 7 may be exchanged with a proportional value such that the amount of gas mixture G vented maybe controlled dynamically both during opening and closing so that the quality of the gas mixture G is not affected by sudden closing or opening by sending disturbances in the mix line.

At the start of mixing in any gas mixer, the gas mixture will take some time to stabilize due to the needed time to stabilize the flows from the different individual gas supply paths G1, G2, ... and due to the needed time to purge the gas line 4 and replace the respective volume with the proper gas. However, venting the gas mixture G at the start of every cycle will result in needlessly wasting gas. Therefore, in order to save on the gas, the present invention implements an intelligent start up procedure in certain embodiments to minimize waste of gas.

Particularly, venting at the outlet 3 of the gas mixer 2, prior to routing the accurately mixed gas mixture G to the process 5 or a storage tank 6, is done for specific cases and for a variable venting time period depending on the following logic:
- When a new gas mix profile is selected to be mixed by a user, the control unit 20 of the mixer recognizes the change in the composition of the gas mixture G to be mixed by the mixer 2 and the mixer 2 goes through the normal venting at the full flow rate (or near the full flow rate) of the mixer 2 for a venting period of time. The full flow allows the system to quickly and effectively purge (flush) the line with the new gas mixture and also allows the mixing to stabilize. Every mixer has a time constant that is a function of the type of gas flow controllers used, the size of the mass flow controllers, the diameter and length of all the internal piping in the system or any restrictions that may be present such as flash back arresters. The venting (purging) time period is therefore a function of the intrinsic time constant of the mixer 2 and the specific gas mixture profile.

The gas mixture profile with a low-percentage dopant or a component in the ppm range will require more time to purge and stabilize the gas mixture.

Particularly, when the gas mixture G does not change composition, and when the mixer 2 has been idle for a given period of time (e.g., such as overnight or over a weekend or in a time frame of a few hours to 1 a day) then the system 1 goes through the venting process. The time for venting, i.e., the venting time period, in this condition will be a function of the idle time of the system 1/mixer 2. Preferably, the system 1 is configured such that it tracks when the system 1 was last activated and calculates the idle time. Particularly, the venting time period is controlled by control unit 20 using a mathematical relationship such as tᵥ= a*tₒ+b, where the tᵥ is the venting time period, tₒ is the time period the system 1 was idle, and a and b are coefficient of the linear equation. Other polynomial or non-linear equations can also be employed.

When the gas mixture G does not change and the system 1 has been idle for a short period of time, less than a predetermined time span, the system 1 does not vent or vents for a considerably shorter venting time period being of the order of 10sec to 60sec. The ideal time in this condition ranges from seconds to up to 3 hours to 12 hours. The venting time period may also be related in a mathematic relationship to the idle time period reflecting an increasing vent with increasing idle time period.

This invention will ensure that the starting phase of the mixing will not affect a running process. This will also ensure that the storage tank 6 being used is always receiving a proper gas mixture G while being filled so that the quality of the gas mixture G is ensured.

Advantageously, the present invention decreases or eliminates any time delays needed to wait for the gas mixture G to reach a stable point. Furthermore, the present invention allows for reduced gas waste or elimination of gas waste by intelligently activating the venting of the mixed gas mixture during the starting phase while ensuring a high accuracy of the gas mixture compared to venting for a given period of time at every starting phase.

## Claims

1. System (1) for mixing gases (G1, G2, ...) to provide a gas mixture (G) comprised of said gases (G1, G2, ...), wherein the system (1) comprises:
- a mixer (2) comprising an outlet (3), the mixer (2) being configured to mix the gases (G1, G2, ...) to provide the gas mixture (G) at the outlet (3) of the mixer (2),
- a gas line (4) for passing the gas mixture (G) to a process (5) or a storage tank (6),
- a vent (8) for venting a portion of the gas mixture (G),
- a valve (7) connected to the outlet (3), wherein the valve (7) comprises an actuator (70) configured to bring the valve (7) into a first state in which the outlet (3) of the mixer (2) is connected to the gas line (4) via the valve (7) so as to pass the gas mixture (G) from the outlet (3) of the mixer (2) via the valve (7) into the gas line (4) to said process (5) or said storage tank (6), and wherein the actuator (70) is configured to bring the valve (7) into a second state in which the outlet (3) is disconnected from the gas line (4) and connected to the vent (8) via the valve (7) to discharge a portion of the gas mixture (G) via the valve (7) through the vent (8), and
- a control unit (20) configured to control the actuator (70) to maintain the valve (7) in the second state over a venting time period during a starting phase of said mixing of said gases (G1, G2, ...) for discharging the gas mixture (G) through the vent (8) until a stable gas mixture (G) is reached by the mixer (2).

2. System according to claim 1, wherein the valve (7) is a three-way-valve, particularly a three-way solenoid valve.

3. System according to claim 1, wherein the valve is a proportional valve (7).

4. System according to one of the preceding claims, wherein the venting time period is adjustable.

5. System according to one of the preceding claims, wherein the venting time period is in the range from 10 seconds to 10 minutes, particularly in the range from 20 seconds to 2 minutes.

6. System according to one of the preceding claims, wherein the system (1) is configured to set the venting time period based on at least a concentration of the respective gas (G1, G2, ...) in the gas mixture (G) and a total flow of the gas mixture (G) provided by the mixer (2).

7. System according to one of the preceding claims, wherein the system (1) is configured to allow inputting of a gas mixture profile by a user, the gas mixture profile comprising the desired concentrations of the gases (G1, G2, ...) of a gas mixture (G), wherein the control unit (20) is configured to cause the mixer (2) to mix the gas mixture (G) according to the gas mixture profile selected by the user, wherein the control unit (20) is configured to detect selection of a new gas mixture profile by the user and whether it deviates from the gas mixture profile of the last previously mixed gas mixture.

8. The system according to claim 7, wherein in case the control unit (20) detects selection of a new gas mixture profile by the user that deviates from the gas mixture profile of the last previously mixed gas mixture, the control unit (20) is configured to set the venting time period based on an intrinsic time constant of the mixer and based on the new gas mixture profile.

9. System according to claim 7 or 8, wherein in case the control unit (20) detects that a new gas mixture profile selected by the user corresponds to the gas mixture profile of the last previously mixed gas mixture and in case the mixer (2) has at least been idle over a pre-defined time span, the control unit (20) is configured to set the venting time period based on a time period during which the mixer was idle, wherein particularly the venting time period t is calculated by the control unit (20) according to t=a*tₒ+b, where tₒis the time period the mixer was idle, and a and b are coefficients.

10. System according to claim 9, wherein in case the control unit (20) detects that a new gas mixture profile selected by the user corresponds to the gas mixture profile of the last previously mixed gas mixture and in case the mixer (2) has been idle by less than said pre-defined time span, the control unit (20) is configured to set the venting time period to zero or to a value that is shorter than the venting time period set in case the mixer (2) was idle at least over said pre-defined time span, wherein particularly said value is in the range from 10 seconds to 60 seconds, and wherein particularly said time span is in the range from 3 hours to 12 hours.

11. System according to one of the preceding claims, wherein the system (1) comprises at least one sensor for measuring a concentration of a gas (G1, G2, ...) of the gas mixture (G) or a plurality of sensors, each sensor configured to measure a concentration of a gas (G1, G2,...) of the gas mixture (G), wherein the control unit (20) is configured to determine if a stable gas mixture (G) is achieved based on the measured concentration(s) and end the venting period if the gas mixture (G) is determined to be stable.

12. A method for providing a gas mixture (G) comprised of gases (G1, G2,...) using a system (1) according to one of the preceding claims, wherein the method comprises the steps of:
- Mixing a plurality of gases (G1, G2, ...) to provide a gas mixture (G) at an outlet (3) of the mixer (2), wherein during a starting phase of said mixing, the gas mixture (G) is discharged via the valve (7) through the vent (8) over a venting time period to achieve a stable gas mixture (G), and
- Passing the gas mixture (G) after said venting via the valve (7) and through the gas line (4) to said process (5) or storage tank (6).

13. The method according to claim 12, wherein the venting time period is automatically adjusted.

14. The method according to claim 12 or 13, wherein the venting time period is automatically set based at least on a desired concentration of the respective gas (G1, G2, ...) in the gas mixture (G) and a total flow of the gas mixture (G) provided by the mixer (2).

15. The method according to one of the claims 12 to 14, wherein prior to mixing the gas mixture (G), the method comprises the step of: Detecting by the control unit (20) if a new gas mixture profile has been selected by the user, the new gas mixture profile comprising desired concentrations of gases (G1, G2, ...) to be mixed by the mixer (2) to provide the gas mixture (G), wherein
- in case the control unit (20) detects selection of a new gas mixture profile by the user that deviates from the gas mixture profile of the last previously mixed gas mixture, the venting time period is automatically set based on an intrinsic time constant of the mixer (2) and based on the new gas mixture profile.
- in case the control unit (20) detects that a new gas mixture profile has been selected by the user that corresponds to the gas mixture profile of the last previously mixed gas mixture and in case the mixer (2) has at least been idle over a pre-defined time span, the venting time period is automatically set based on a time period during which the mixer (2) has been idle, wherein particularly the venting time period t is set to t= a*tₒ + b, where tₒis the time period the mixer (2) has been idle, and wherein a and b are coefficients.
- in case the control unit (20) detects that a new gas mixture profile has been selected by the user that corresponds to the gas mixture profile of the last previously mixed gas mixture and in case the mixer (2) has been idle by less than said pre-defined time span, the venting time period is automatically set to zero or to a value that is shorter than the venting time period set in case the mixer (2) was idle at least over said pre-defined time span, wherein particularly said value is in the range from 10 seconds to 60 seconds, and wherein particularly said time span is in the range from 3 hours to 12 hours.
